# EUROPÄISCHE PATENTSCHRIFT

(11) **EP 2 816 648 B1**
(45) Veröffentlichungstag und Bekanntmachung des Hinweises auf die Patenterteilung: **06.12.2017**
(21) Anmeldenummer: 14172409.6
(22) Anmeldetag: 13.06.2014
(51) Int. Cl.: H01M 8/04089, H01M 8/04119, H01M 8/0444, H01M 8/249

(54) **Brennstoffzellensystem und Verfahren zum Betreiben eines Brennstoffzellensystems**
Fuel cell system and method for operating a fuel cell system
Système de piles à combustible et procédé de fonctionnement d'un système de piles à combustible

(30) Priorität: 20.06.2013 DE 102013211730
(43) Veröffentlichungstag der Anmeldung: 24.12.2014
(73) Patentinhaber: Deutsches Zentrum für Luft- und Raumfahrt e.V., 51147 Köln (DE)
(72) Erfinder: Schirmer, Johannes, 71549 Auenwald (DE)
(74) Vertreter: Hoeger, Stellrecht & Partner Patentanwälte mbB

(56) Entgegenhaltungen:
- WO-A1-96/03782
- DE-A1-102008 033 986
- US-A1- 2010 047 641

## Beschreibung

Die vorliegende Erfindung betrifft ein Brennstoffzellensystem, insbesondere zur Bereitstellung von elektrischer Energie.

Die US 2010/0047641 A1 offenbart ein hocheffizientes Brennstoffzellensystem mit zwei Brennstoffzellenstacks.

Die WO 96/03782 A1 offenbart eine Kühlvorrichtung für einen Brennstoffzellenstack.

Die DE 10 2008 033 986 A1 offenbart ein Brennstoffzellensystem mit zwei in Serie geschalteten Brennstoffzellenstapeln.

Der vorliegenden Erfindung liegt die Aufgabe zugrunde, ein Brennstoffzellensystem bereitzustellen, welches einen brennstoffarmen Abgasstrom aufweist, so dass das Brennstoffzellensystem insbesondere in geschlossenen Räumen Verwendung finden kann.

Diese Aufgabe wird erfindungsgemäß durch ein Brennstoffzellensystem gemäß Anspruch 1 gelöst.

Dadurch, dass erfindungsgemäß mittels der Anodenabgasführung der ersten Brennstoffzellenvorrichtung das in dieser ersten Brennstoffzellenvorrichtung erzeugte Anodenabgas über die Brennstoffzuführung einer zweiten Brennstoffzellenvorrichtung als Brennstoffstrom dieser zweiten Brennstoffzellenvorrichtung zuführbar ist, kann der in dem Anodenabgas der ersten Brennstoffzellenvorrichtung enthaltene Rest-Brennstoff in der zweiten Brennstoffzellenvorrichtung umgesetzt werden, so dass das letztlich an die Umgebung abgegebene Anodenabgas der zweiten Brennstoffzellenvorrichtung einen geringen Rest-Brennstoffgehalt aufweist.

Mittels einer Anodenabgasführung der zweiten Brennstoffzellenvorrichtung ist das in dieser zweiten Brennstoffzellenvorrichtung erzeugte Anodenabgas zumindest teilweise, insbesondere vollständig, über eine Oxidatorzuführung der ersten Brennstoffzellenvorrichtung als Teil des Oxidatorstroms dieser ersten Brennstoffzellenvorrichtung zuführbar.

Ferner kann vorgesehen sein, dass mittels einer Anodenabgasführung der zweiten Brennstoffzellenvorrichtung das in dieser zweiten Brennstoffzellenvorrichtung erzeugte Anodenabgas zumindest teilweise, insbesondere vollständig, über eine Oxidatorzuführung der zweiten Brennstoffzellenvorrichtung als Teil des Oxidatorstroms dieser zweiten Brennstoffzellenvorrichtung zuführbar ist.

Das Kathodenabgas der ersten Brennstoffzellenvorrichtung und/oder das Kathodenabgas der zweiten Brennstoffzellenvorrichtung wird vorzugsweise an die Umgebung abgegeben.

Alternativ oder ergänzend hierzu kann vorgesehen sein, dass mittels einer Kathodenabgasführung der ersten Brennstoffzellenvorrichtung das in dieser ersten Brennstoffzellenvorrichtung erzeugte Kathodenabgas zumindest teilweise, insbesondere vollständig, über eine Oxidatorzuführung der zweiten Brennstoffzellenvorrichtung als Oxidatorstrom oder als Teil des Oxidatorstroms der zweiten Brennstoffzellenvorrichtung zuführbar ist.

Günstig kann es sein, wenn mittels der Anodenabgasführung der zweiten Brennstoffzellenvorrichtung das in dieser zweiten Brennstoffzellenvorrichtung erzeugte Anodenabgas zumindest teilweise, insbesondere vollständig, der Kathodenabgasführung der ersten Brennstoffzellenvorrichtung zuführbar ist.

Ferner kann vorgesehen sein, dass mittels der Anodenabgasführung der zweiten Brennstoffzellenvorrichtung das in dieser zweiten Brennstoffzellenvorrichtung erzeugte Anodenabgas zumindest teilweise, insbesondere vollständig der Kathodenabgasführung der zweiten Brennstoffzellenvorrichtung zuführbar ist.

Der Brennstoffstrom der ersten Brennstoffzellenvorrichtung ist vorzugsweise Wasserstoff oder umfasst Wasserstoff.

Bei einer Ausgestaltung der Erfindung kann vorgesehen sein, dass das Brennstoffzellensystem mindestens eine Entfeuchtungsvorrichtung, insbesondere eine Entwässerungsvorrichtung, zum Abscheiden von Wasser aus dem Abgas einer oder mehrerer Brennstoffzellenvorrichtungen umfasst.

Insbesondere kann vorgesehen sein, dass mindestens eine Entfeuchtungsvorrichtung in einer Anodenabgasführung, insbesondere in der Anodenabgasführung der ersten Brennstoffzellenvorrichtung oder der Anodenabgasführung der zweiten Brennstoffzellenvorrichtung, angeordnet ist.

Es kann jedoch auch vorgesehen sein, dass sowohl in der Anodenabgasführung der ersten Brennstoffzellenvorrichtung als auch in der Anodenabgasführung der zweiten Brennstoffzellenvorrichtung jeweils eine Entfeuchtungsvorrichtung angeordnet ist.

Das Brennstoffzellensystem umfasst eine Steuervorrichtung zum Steuern und/oder Regeln des Brennstoffzellensystems. Mittels der Steuervorrichtung ist die zweite Brennstoffzellenvorrichtung in einen Brennstoffabreicherungsmodus versetzbar, in welchem unabhängig von einer mittels der zweiten Brennstoffzellenvorrichtung bereitzustellenden elektrischen Leistung oder Energie ein Umsetzungsgrad des zugeführten Brennstoffs maximal ist.

Der Umsetzungsgrad des zugeführten Brennstoffs ist dabei ein Maß für den Anteil und/oder die Menge des im Anodenabgas der zweiten Brennstoffzellenvorrichtung enthaltenen Brennstoffs im Verhältnis zu dem insgesamt der zweiten Brennstoffzellenvorrichtung zugeführten Brennstoff. Bei einem maximalen Umsetzungsgrad des zugeführten Brennstoffs ist die Rest-Brennstoffmenge des Anodenabgases minimal.

Mindestens eine Brennstoffzellenvorrichtung, insbesondere die erste Brennstoffzellenvorrichtung und/oder die zweite Brennstoffzellenvorrichtung, umfasst vorzugsweise eine Zirkulationsvorrichtung, mittels welcher ein der Anodenseite zugeführter Brennstoffstrom in einem durch die Anodenseite hindurchgeführten Kreislauf führbar ist. Der der Anodenseite zugeführte Brennstoffstrom wird somit vorzugsweise nicht nur einmalig durch die Anodenseite hindurchgeführt, sondern durchströmt die Anodenseite vorzugsweise mehrfach, bis aufgrund eines zu geringen Brennstoffgehalts ein Austausch des Brennstoffstroms erforderlich ist. Der im Kreislauf geführte Strom wird dann als Anodenabgas über die Anodenabgasführung abgeführt und durch einen über die Brennstoffzuführung zugeführten frischen Brennstoffstrom ersetzt.

Mindestens eine Brennstoffzellenvorrichtung, insbesondere die erste Brennstoffzellenvorrichtung und/oder die zweite Brennstoffzellenvorrichtung, umfasst vorzugsweise eine Auslassvorrichtung, mittels welcher das Anodenabgas von der Anodenseite der Brennstoffzellenvorrichtung kontinuierlich oder mit, insbesondere regelmäßigen, Unterbrechungen über die Anodenabgasführung abführbar ist.

Mindestens eine Brennstoffzellenvorrichtung, insbesondere die erste Brennstoffzellenvorrichtung und/oder die zweite Brennstoffzellenvorrichtung, umfasst vorzugsweise ferner eine Auslassvorrichtung, mittels welcher das Kathodenabgas von der Kathodenseite der Brennstoffzellenvorrichtung kontinuierlich oder mit, insbesondere regelmäßigen, Unterbrechungen über die Kathodenabgasführung abführbar ist.

Die vorliegende Erfindung betrifft ferner ein Verfahren zum Betreiben eines Brennstoffzellensystems.

Der Erfindung liegt diesbezüglich die Aufgabe zugrunde, ein Verfahren zum Betreiben eines Brennstoffzellensystems bereitzustellen, mittels welchem ein Anodenabgasstrom mit geringem Brennstoffgehalt erhältlich ist, so dass das Brennstoffzellensystem insbesondere in geschlossenen Räumen Verwendung finden kann.

Diese Aufgabe wird erfindungsgemäß durch ein Verfahren gemäß Anspruch 11 gelöst.

Das erfindungsgemäße Verfahren weist vorzugsweise einzelne oder mehrere der im Zusammenhang mit dem erfindungsgemäßen Brennstoffzellensystem beschriebenen Merkmale und/oder Vorteile auf.

Das in der zweiten Brennstoffzellenvorrichtung erzeugte Anodenabgas wird zumindest teilweise, insbesondere vollständig, als Teil eines Oxidatorstroms der ersten Brennstoffzellenvorrichtung und/oder der zweiten Brennstoffzellenvorrichtung zugeführt.

Ein in der ersten Brennstoffzellenvorrichtung erzeugtes Kathodenabgas wird ferner vorzugsweise zumindest teilweise, insbesondere vollständig, als ein Oxidatorstrom oder als Teil eines Oxidatorstroms der zweiten Brennstoffzellenvorrichtung zugeführt.

Ein in der zweiten Brennstoffzellenvorrichtung erzeugtes Anodenabgas kann beispielsweise zumindest teilweise, insbesondere vollständig, einem Kathodenabgas der ersten Brennstoffzellenvorrichtung und/oder einem Kathodenabgas der zweiten Brennstoffzellenvorrichtung zugeführt werden.

Die zweite Brennstoffzellenvorrichtung wird in einem Brennstoffabreicherungsmodus betrieben, in welchem unabhängig von einer mittels der zweiten Brennstoffzellenvorrichtung bereitzustellenden elektrischen Leistung oder Energie ein Umsetzungsgrad des zugeführten Brennstoffs maximal ist.

Bei einer Ausgestaltung der Erfindung kann vorgesehen sein, dass bei mindestens einer Brennstoffzellenvorrichtung, insbesondere bei der ersten Brennstoffzellenvorrichtung und/oder bei der zweiten Brennstoffzellenvorrichtung, ein der Anodenseite zugeführter Brennstoffstrom in einem durch die Anodenseite hindurchgeführten Kreislauf geführt und in der Brennstoffzellenvorrichtung erzeugtes Abgas periodisch und/oder stoßweise abgeführt wird.

Ein Brennstoffgehalt, insbesondere ein Wasserstoffgehalt, des an eine Umgebung des Brennstoffzellensystems abgegebenen Kathodenabgases beträgt vorzugsweise höchstens ungefähr 2 Vol.-%, insbesondere höchstens ungefähr 1 Vol.-%.

Ferner können das erfindungsgemäße Brennstoffzellensystem und/oder das erfindungsgemäße Verfahren einzelne oder mehrere der nachfolgend beschriebenen Merkmale und/oder Vorteile aufweisen:
Vorzugsweise wird mittels des erfindungsgemäßen Brennstoffsystems ein Austrag von Wasserstoff durch das Abgas von Brennstoffzellen und somit die Abgabe von Wasserstoff an die Umgebung vermieden oder erfolgt zumindest in unkritischen und nicht sicherheitsrelevanten Mengen.

Vorzugsweise erfolgt eine Abreicherung und/oder eine Neutralisierung des Wasserstoffs durch Rückführung und Umsetzung des Wasserstoffs in dem Brennstoffzellensystem selbst. Die Rückführung erfolgt dabei vorzugsweise derart, dass die Brennstoffzellenvorrichtung des Brennstoffzellensystems nicht beschädigt werden.

Insbesondere beim Einsatz von Brennstoffzellensystemen in Flugzeugen sind die Sicherheitsanforderungen sehr hoch. Wasserstoff, insbesondere wasserstoffhaltiges Abgas, muss oftmals über Bord geleitet werden, was in der technischen Umsetzung sehr aufwendig sein kann.

Durch eine Rückführung des Wasserstoffs zur Umsetzung desselben innerhalb des Brennstoffzellensystems können vorzugsweise vorgegebene Grenzwerte für die Wasserstoffbelastung des Abgases eingehalten werden.

Durch die Einhaltung von Grenzwerten können aufwendige Sicherheitseinrichtungen, Austragseinrichtungen, Zulassungsprozesse, etc. entbehrlich sein.

Bei der Verwendung eines Brennstoffzellensystems in geschlossenen Räumen, beispielsweise in einem Flugzeug, oder in Kapselungen des Brennstoffzellensystems kann es durch wasserstoffhaltiges Abgas zur Anreicherung von Wasserstoff in der Umgebung des Brennstoffzellensystems kommen, wodurch sich zündfähige oder explosive Gemische bilden können. Mittels des erfindungsgemäßen Brennstoffzellensystems kann dies vorzugsweise verhindert werden.

Eine separate Verbrennungsvorrichtung zur Umsetzung des in dem Abgas enthaltenen Brennstoffs ist vorzugsweise entbehrlich.

Die Rückführung von Brennstoff erfolgt vorzugsweise kontinuierlich, um möglichst homogene und geringe Konzentrationen von Brennstoff, insbesondere Wasserstoff, an einem Kathodeneingang (Oxidatorzuführung) zu erreichen.

Die Rückführung des Brennstoffs, insbesondere des Wasserstoffs, auf die Kathodenseite erfolgt vorzugsweise mit einer möglichst geringen Brennstoffmenge und/oder Brennstoffkonzentration, insbesondere Wasserstoffmenge und/oder Wasserstoffkonzentration.

Vorzugsweise ist eine Kombination aus einer Abreicherung des Brennstoffs auf einer Anodenseite der zweiten Brennstoffzellenvorrichtung und einer folgenden Abreicherung (Neutralisierung) auf der Kathodenseite dieser zweiten Brennstoffzellenvorrichtung oder der ersten Brennstoffzellenvorrichtung vorgesehen.

Die zweite Brennstoffzellenvorrichtung ist vorzugsweise nicht auf hohe Leistung, Effizienz, etc. ausgelegt, sondern auf die Abreicherung des Brennstoffs, insbesondere des Wasserstoffs.

Der zweiten Brennstoffzellenvorrichtung wird vorzugsweise kein zusätzlicher Brennstoff, insbesondere kein zusätzlicher Wasserstoff, zugeführt, sondern lediglich das Anodenabgas der ersten Brennstoffzellenvorrichtung.

Vorzugsweise kann die in dem Anodenabgas aus der ersten Brennstoffzellenvorrichtung enthaltene Wasserstoffmenge mittels der zweiten Brennstoffzellenvorrichtung, insbesondere auf der Anodenseite der zweiten Brennstoffzellenvorrichtung, auf unter ungefähr 5% abgereichert werden.

Der übrige Brennstoff in dem Anodenabgas der zweiten Brennstoffzellenvorrichtung wird vorzugsweise der Oxidatorzuführung der zweiten Brennstoffzellenvorrichtung zugeführt. Hierbei erfolgt vorzugsweise eine weitere Umsetzung des in dem Anodenabgas enthaltenen Brennstoffs, insbesondere Wasserstoffs, an der Kathodenseite des Brennstoffzellensystems, insbesondere der zweiten Brennstoffzellenvorrichtung.

Der nicht umgewandelte Brennstoff, insbesondere Wasserstoff, wird mit dem Kathodenabgas ausgetragen und dabei vorzugsweise weiter verdünnt. Insbesondere ergeben sich vorzugsweise Rest-Brennstoffkonzentrationen, welche nicht sicherheitsrelevant sind und insbesondere im ppm-Bereich liegen.

Ferner kann vorgesehen sein, dass das Anodenabgas der zweiten Brennstoffzellenvorrichtung der Oxidatorzuführung der ersten Brennstoffzellenvorrichtung zugeführt wird. Insbesondere dann, wenn das Kathodenabgas der ersten Brennstoffzellenvorrichtung zumindest teilweise der Oxidatorzuführung der zweiten Brennstoffzellenvorrichtung zugeführt wird, kann hierdurch eine noch weitere Abreicherung des Brennstoffs, insbesondere des Wasserstoffs, erfolgen.

Vorzugsweise werden am Systemausgang unkritische Wasserstoffkonzentrationen erreicht, wodurch die benötigten Sicherheitseinrichtungen deutlich vereinfacht werden können.

Durch die zunächst erfolgende Abreicherung der Wasserstoffmenge auf der Anodenseite wird die Wasserstoffmenge, welche vorzugsweise der Kathodenseite zugeführt wird, erheblich reduziert und ist somit vorzugsweise unproblematisch mit Hinblick auf die Erwärmung und/oder Potentialerniedrigung der Brennstoffzellenvorrichtungen.

Vorzugsweise erfolgt keine Aufkonzentration von Wasserdampf, Stickstoff oder Ähnlichem.

Die Wasserstoffrückführung kann vorzugsweise durch einen Spülvorgang (Purgevorgang) in der zweiten Brennstoffzellenvorrichtung geregelt erfolgen.

Die Dosierung des Wasserstoffs kann vorzugsweise unter Berücksichtigung des Kathodenvolumenstroms und/oder unter Berücksichtigung von Grenzwerten erfolgen.

Die Wasserstoffrückführung erfolgt vorzugsweise möglichst homogen und kontinuierlich. Hierdurch können vorzugsweise Konzentrationsspitzen von Wasserstoff vermieden werden. Eine Überschreitung von Grenzwerten, Hotspots oder lokale Potentialdifferenzen können hierdurch vorzugsweise vermieden werden.

Die Wasserstoffrückführung kann ferner vorzugsweise unter Berücksichtigung und/oder in Abhängigkeit von dem Kathodenzuluftstrom (Oxidatorstrom) und/oder in Abhängigkeit von Grenzwerten erfolgen.

Die Überschreitung von Grenzwerten, wodurch die Brennstoffzellenvorrichtungen beschädigt werden könnten, kann vorzugsweise vermieden werden.

Zwischen der Anodenabgasführung der ersten Brennstoffzellenvorrichtung und der Brennstoffzuführung der zweiten Brennstoffzellenvorrichtung kann vorzugsweise eine Kondensation (Entfeuchtungsvorrichtung) erfolgen. Alternativ oder ergänzend hierzu kann eine Abtrennung von Stickstoff durchgeführt werden.

Das erfindungsgemäße Brennstoffzellensystem eignet sich insbesondere zur Verwendung in geschlossenen Räumen und für Luftfahrtanwendungen.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:

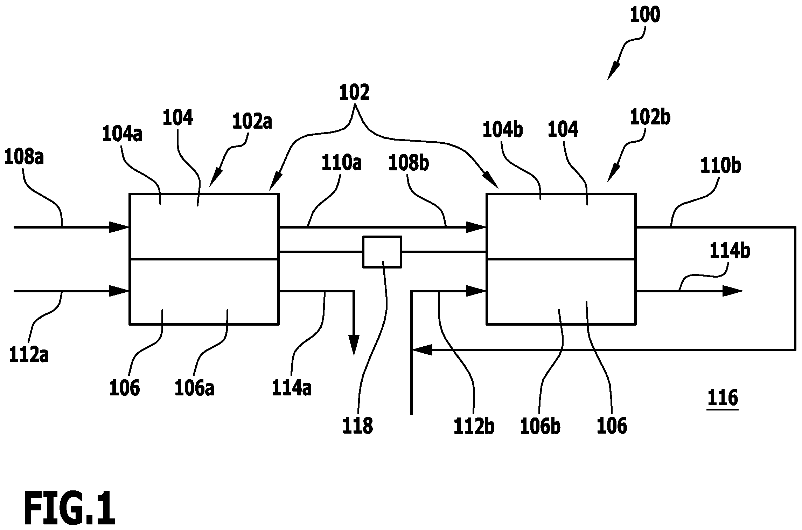

- Fig. 1: eine schematische Darstellung einer ersten Ausführungsform eines Brennstoffzellensystems, bei welcher ein Anodenabgas aus einer ersten Brennstoffzellenvorrichtung über eine Brennstoffzuführung einer zweiten Brennstoffzellenvorrichtung dieser zweiten Brennstoffzellenvorrichtung zugeführt wird und bei welcher Anodenabgas aus der zweiten Brennstoffzellenvorrichtung über eine Oxidatorzuführung der zweiten Brennstoffzellenvorrichtung derselben zugeführt wird, wobei Kathodenabgas aus der ersten Brennstoffzellenvorrichtung an die Umgebung abgegeben wird;

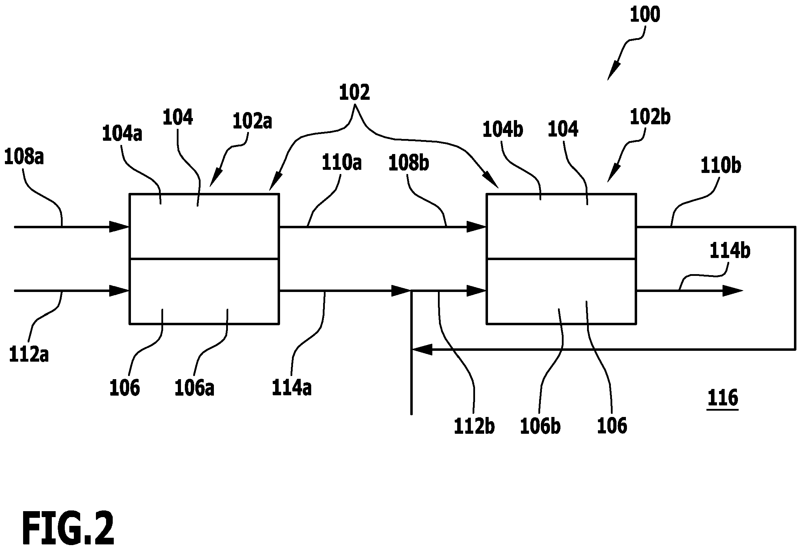

- Fig. 2: eine der Fig. 1 entsprechende schematische Darstellung einer zweiten Ausführungsform eines Brennstoffzellensystems, bei welcher das Kathodenabgas aus der ersten Brennstoffzellenvorrichtung mittels der Oxidatorzuführung der zweiten Brennstoffzellenvorrichtung dieser zweiten Brennstoffzellenvorrichtung zugeführt wird;

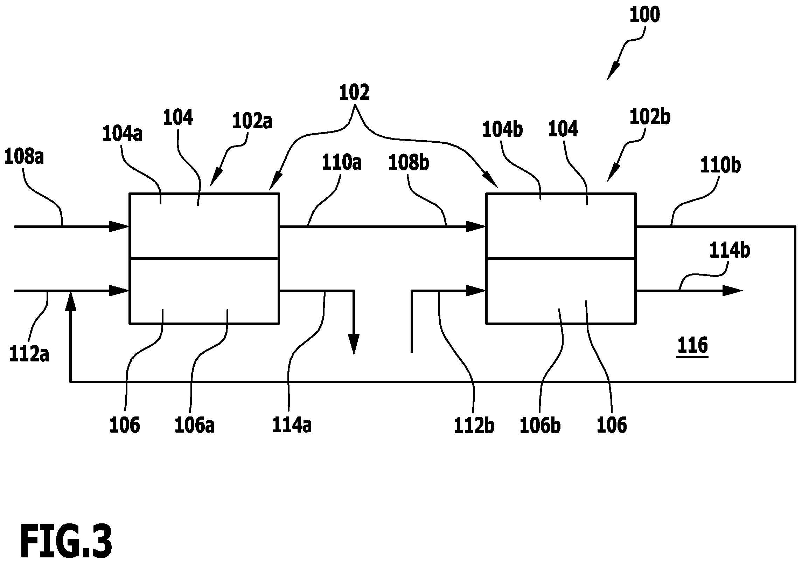

- Fig. 3: eine der Fig. 1 entsprechende schematische Darstellung einer dritten Ausführungsform eines Brennstoffzellensystems, bei welcher das Anodenabgas der zweiten Brennstoffzellenvorrichtung über eine Oxidatorzuführung der ersten Brennstoffzellenvorrichtung dieser ersten Brennstoffzellenvorrichtung zugeführt wird, wobei das Kathodenabgas aus der ersten Brennstoffzellenvorrichtung an die Umgebung abgegeben wird;

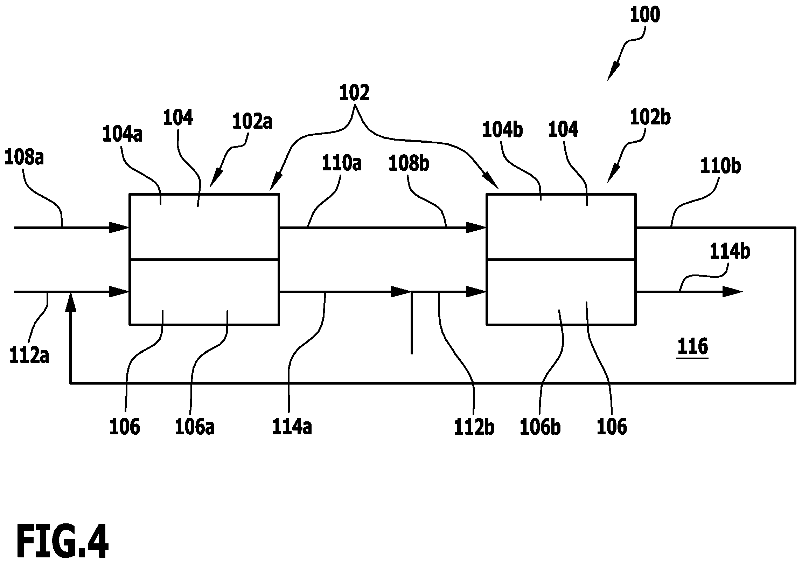

- Fig. 4: eine der Fig. 3 entsprechende schematische Darstellung einer vierten Ausführungsform eines Brennstoffzellensystems, bei welcher das Kathodenabgas der ersten Brennstoffzellenvorrichtung über die Oxidatorzuführung der zweiten Brennstoffzellenvorrichtung dieser zweiten Brennstoffzellenvorrichtung zugeführt wird;

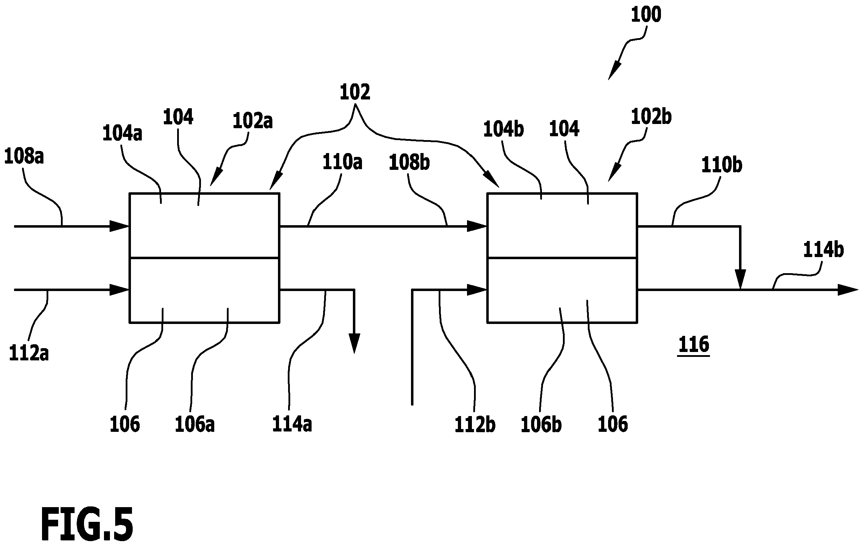

- Fig. 5: eine der Fig. 1 entsprechende schematische Darstellung einer nicht erfindungsgemäßen fünften Ausführungsform eines Brennstoffzellensystems, bei welcher das Anodenabgas der ersten Brennstoffzellenvorrichtung über die Brennstoffzuführung der zweiten Brennstoffzellenvorrichtung dieser zweiten Brennstoffzellenvorrichtung zugeführt wird, wobei das Anodenabgas der zweiten Brennstoffzellenvorrichtung dem Kathodenabgas der zweiten Brennstoffzellenvorrichtung zugeführt wird;

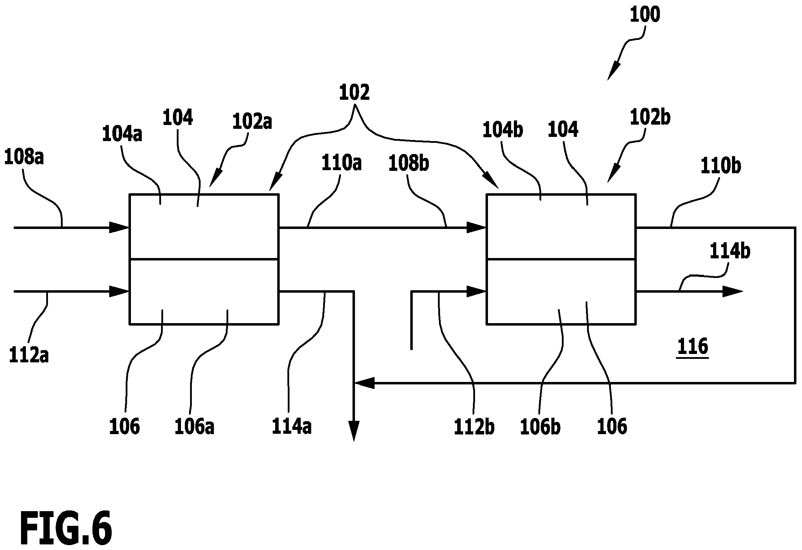

- Fig. 6: eine der Fig. 5 entsprechende schematische Darstellung einer nicht erfindungsgemäßen sechsten Ausführungsform eines Brennstoffzellensystems, bei welcher das Anodenabgas aus der zweiten Brennstoffzellenvorrichtung dem Kathodenabgas aus der ersten Brennstoffzellenvorrichtung zugeführt wird;

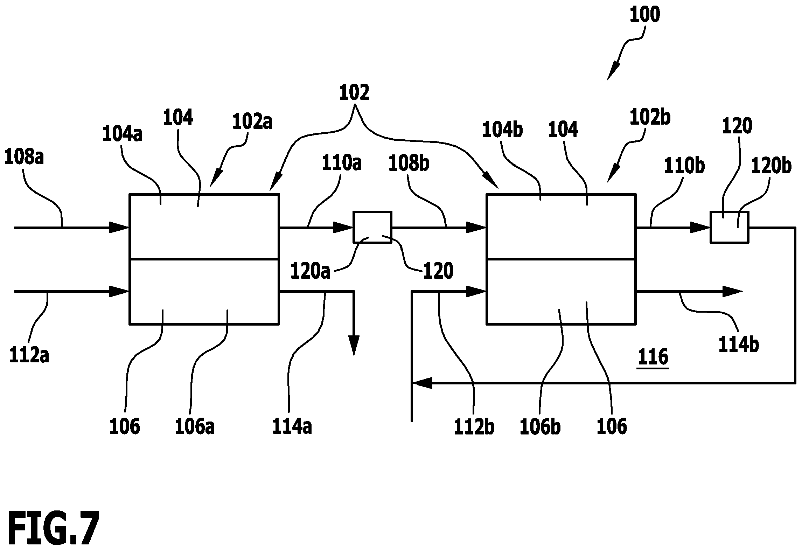

- Fig. 7: eine der Fig. 1 entsprechende schematische Darstellung einer siebten Ausführungsform eines Brennstoffzellensystems, bei welcher das Anodenabgas aus der ersten Brennstoffzellenvorrichtung und das Anodenabgas aus der zweiten Brennstoffzellenvorrichtung mittels Entfeuchtungsvorrichtungen von Wasserdampf befreit werden; und

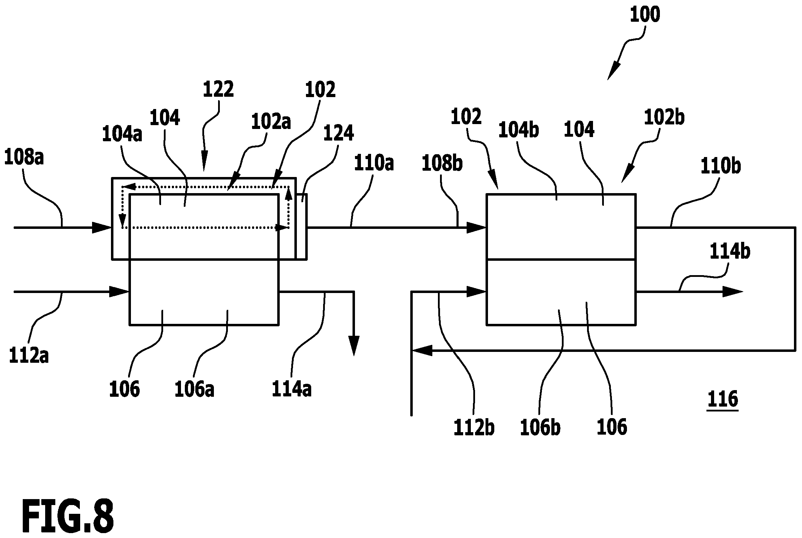

- Fig. 8: eine der Fig. 1 entsprechende schematische Darstellung einer achten Ausführungsform eines Brennstoffzellensystems, bei welcher eine Zirkulationsvorrichtung sowie eine Auslassvorrichtung vorgesehen sind.

Gleiche oder funktional äquivalente Elemente sind in sämtlichen Figuren mit denselben Bezugszeichen versehen.

Eine in Fig. 1 dargestellte erste Ausführungsform eines als Ganzes mit 100 bezeichneten Brennstoffzellensystems umfasst mehrere, beispielsweise zwei Brennstoffzellenvorrichtungen 102.

Insbesondere sind eine erste Brennstoffzellenvorrichtung 102a und eine zweite Brennstoffzellenvorrichtung 102b vorgesehen.

Jede Brennstoffzellenvorrichtung 102 umfasst eine Anodenseite 104 und eine Kathodenseite 106.

Die Brennstoffzellenvorrichtungen 102 sind beispielsweise als Polymerelektrolyt-Brennstoffzellenvorrichtungen ausgebildet.

Der Anodenseite 104 der Brennstoffzellenvorrichtung 102 ist über eine Brennstoffzuführung 108 Brennstoff, insbesondere Wasserstoff, zuführbar.

Auf der Anodenseite 104 gebildetes Anodenabgas ist über eine Anodenabgasführung 110 der Brennstoffzellenvorrichtung 102 abführbar.

Der Kathodenseite 106 der Brennstoffzellenvorrichtung 102 ist mittels einer Oxidatorzuführung 112 Oxidator, insbesondere Luft, zuführbar.

Auf der Kathodenseite 106 gebildetes Kathodenabgas ist mittels einer Kathodenabgasführung 114 der Brennstoffzellenvorrichtung 102 abführbar.

Das Anodenabgas und/oder das Kathodenabgas ist insbesondere an eine Umgebung 116 des Brennstoffzellensystems 100 abgebbar.

Das Brennstoffzellensystem 100 umfasst ferner eine Steuervorrichtung 118 zur Steuerung und/oder Regelung der Brennstoffzellenvorrichtungen 102 und des gesamten Brennstoffzellensystems 100.

Auf die einzelnen Bestandteile der ersten Brennstoffzellenvorrichtung 102a und der zweiten Brennstoffzellenvorrichtung 102b wird nachfolgend durch jeweilige Ergänzung der Buchstaben "a" bzw. "b" an den jeweiligen Bezugszeichen Bezug genommen.

Bei der in Fig. 1 dargestellten ersten Ausführungsform des Brennstoffzellensystems 100 ist vorgesehen, dass die Anodenabgasführung 110a der ersten Brennstoffzellenvorrichtung 102a mit der Brennstoffzuführung 108b der zweiten Brennstoffzellenvorrichtung 102b verbunden ist, so dass Anodenabgas von der Anodenseite 104a der ersten Brennstoffzellenvorrichtung 102a der Anodenseite 104b der zweiten Brennstoffzellenvorrichtung 102b zuführbar ist.

Ferner ist die Abgasführung 110b der zweiten Brennstoffzellenvorrichtung 102b mit der Oxidatorzuführung 112b der zweiten Brennstoffzellenvorrichtung 102b verbunden, so dass Anodenabgas von der Anodenseite 104b der zweiten Brennstoffzellenvorrichtung 102b der Kathodenseite 106b der zweiten Brennstoffzellenvorrichtung 102b zuführbar ist.

Die in Fig. 1 dargestellte erste Ausführungsform des Brennstoffzellensystems 100 funktioniert wie folgt:
Im Betrieb der ersten Brennstoffzellenvorrichtung 102a wird sowohl Anodenabgas als auch Kathodenabgas erzeugt.

Das Kathodenabgas wird über die Kathodenabgasführung 114a an die Umgebungen 116 abgegeben.

Das üblicherweise noch Rest-Brennstoff, insbesondere Rest-Wasserstoff, enthaltende Anodenabgas wird über die Anodenabgasführung 110a und die Brennstoffzuführung 108b der Anodenseite 104b der zweiten Brennstoffzellenvorrichtung 102b zugeführt.

Der in dem Anodenabgas der ersten Brennstoffzellenvorrichtung 102a enthaltene Rest-Brennstoff kann somit mittels der zweiten Brennstoffzellenvorrichtung 102b weiter umgesetzt werden. Insbesondere wird der Anodenseite 104b der zweiten Brennstoffzellenvorrichtung 102b ausschließlich das Anodenabgas aus der ersten Brennstoffzellenvorrichtung 102a und kein weiterer Brennstoff zugeführt. Die ausgetragene Brennstoffmenge wird hierdurch minimiert.

Das Anodenabgas der zweiten Brennstoffzellenvorrichtung 102b wird über die Oxidatorzuführung 112b der zweiten Brennstoffzellenvorrichtung 102b der Kathodenseite 106b der zweiten Brennstoffzellenvorrichtung 102b zugeführt. Der in dem Anodenabgas enthaltene Rest-Wasserstoff wird hierdurch mit weiterem Oxidator in direkten Kontakt gebracht und kann somit weiter chemisch umgesetzt werden. Das über die Kathodenabgasführung 114b der zweiten Brennstoffzellenvorrichtung 102b abgeführte Kathodenabgas ist somit besonders brennstoffarm. Eine Abgabe des Kathodenabgases der zweiten Brennstoffzellenvorrichtung 102b samt des durch die Kathodenseite 106b hindurchgeführten Anodenabgases der zweiten Brennstoffzellenvorrichtung 102b an die Umgebung 116 ist somit unbedenklich.

Mittels der Steuervorrichtung 118 ist insbesondere die zweite Brennstoffzellenvorrichtung 102b vorzugsweise in einem Brennstoffabreicherungsmodus betreibbar. In diesem Betriebsmodus wird die zweite Brennstoffzellenvorrichtung 102b vorzugsweise so betrieben, dass auf der Anodenseite 104b möglichst viel Brennstoff umgewandelt wird. Die dabei erzielte elektrische Leistung der zweiten Brennstoffzellenvorrichtung 102b ist dabei vorzugsweise nachrangig.

Eine in Fig. 2 dargestellte zweite Ausführungsform eines Brennstoffzellensystems 100 unterscheidet sich von der in Fig. 1 dargestellten ersten Ausführungsform im Wesentlichen dadurch, dass die Kathodenabgasführung 114a der ersten Brennstoffzellenvorrichtung 102a in die Oxidatorzuführung 112b der zweiten Brennstoffzellenvorrichtung 102b mündet.

Das auf der Kathodenseite 106a der ersten Brennstoffzellenvorrichtung 102a gebildete Kathodenabgas wird somit bei der in Fig. 2 dargestellten zweiten Ausführungsform des Brennstoffzellensystems 100 als Oxidatorstrom oder als Teil des Oxidatorstroms der Kathodenseite 106b der zweiten Brennstoffzellenvorrichtung 102b zugeführt.

Im Übrigen stimmt die in Fig. 2 dargestellte zweite Ausführungsform des Brennstoffzellensystems 100 hinsichtlich Aufbau und Funktion mit der in Fig. 1 dargestellten ersten Ausführungsform überein, so dass auf deren vorstehende Beschreibung insoweit Bezug genommen wird.

Bei einer weiteren (nicht dargestellten) Ausführungsform eines Brennstoffzellensystems 100 kann vorgesehen sein, dass mittels der Kathodenabgasführung 114a der ersten Brennstoffzellenvorrichtung 102a das auf der Kathodenseite 106a der ersten Brennstoffzellenvorrichtung 102a gebildete Kathodenabgas teilweise an die Umgebung 116 abgegeben und teilweise über die Oxidatorzuführung 112b der Kathodenseite 106b der zweiten Brennstoffzellenvorrichtung 102b zugeführt wird. Diese alternative Ausführungsform eines Brennstoffzellensystems 100 ist somit eine Kombination der ersten Ausführungsform mit der zweiten Ausführungsform eines Brennstoffzellensystems 100 gemäß den Fig. 1 und 2.

Eine in Fig. 3 dargestellte dritte Ausführungsform eines Brennstoffzellensystems 100 unterscheidet sich von der in Fig. 1 dargestellten ersten Ausführungsform im Wesentlichen dadurch, dass die Anodenabgasführung 110b der zweiten Brennstoffzellenvorrichtung 102b nicht in die Oxidatorzuführung 112b der zweiten Brennstoffzellenvorrichtung 102b, sondern in die Oxidatorzuführung 112a der ersten Brennstoffzellenvorrichtung 102a mündet.

Bei der in Fig. 3 dargestellten dritten Ausführungsform des Brennstoffzellensystems 100 ist somit vorgesehen, dass das Anodenabgas der zweiten Brennstoffzellenvorrichtung 102b als Oxidatorstrom oder als Teil des Oxidatorstroms der Kathodenseite 106a der ersten Brennstoffzellenvorrichtung 102a zuführbar ist.

Insbesondere dann, wenn die erste Brennstoffzellenvorrichtung 102a wesentlich größer dimensioniert ist als die zweite Brennstoffzellenvorrichtung 102b, kann hierdurch eine besonders starke Verdünnung des Anodenabgases der zweiten Brennstoffzellenvorrichtung 102b erfolgen, bevor dieses nach dem Hindurchleiten desselben durch die Kathodenseite 106a der ersten Brennstoffzellenvorrichtung 102a an die Umgebung 116 abgegeben wird.

Im Übrigen stimmt die in Fig. 3 dargestellte dritte Ausführungsform des Brennstoffzellensystems 100 hinsichtlich Aufbau und Funktion mit der in Fig. 1 dargestellten ersten Ausführungsform überein, so dass auf deren vorstehende Beschreibung insoweit Bezug genommen wird.

Eine in Fig. 4 dargestellte vierte Ausführungsform eines Brennstoffzellensystems 100 unterscheidet sich von der in Fig. 2 dargestellten zweiten Ausführungsform im Wesentlichen dadurch, dass die Anodenabgasführung 110b gemäß der in Fig. 3 dargestellten dritten Ausführungsform in die Oxidatorzuführung 112a der ersten Brennstoffzellenvorrichtung 102a mündet.

Im Übrigen stimmt die in Fig. 4 dargestellte vierte Ausführungsform des Brennstoffzellensystems 100 hinsichtlich Aufbau und Funktion mit der in Fig. 2 dargestellten zweiten Ausführungsform überein, so dass auf deren vorstehende Beschreibung insoweit Bezug genommen wird.

Bei einer weiteren (nicht dargestellten) Ausführungsform eines Brennstoffzellensystems 100 kann eine Kombination der Ausführungsformen gemäß den Fig. 3 und 4 vorgesehen sein, bei welcher das Kathodenabgas aus der ersten Brennstoffzellenvorrichtung 102a teilweise an die Umgebung 116 abgegeben und teilweise über die Oxidatorzuführung 112b der zweiten Brennstoffzellenvorrichtung 102b dieser zweiten Brennstoffzellenvorrichtung 102b zugeführt wird.

Eine in Fig. 5 dargestellte fünfte Ausführungsform eines Brennstoffzellensystems 100 unterscheidet sich von der in Fig. 1 dargestellten ersten Ausführungsform im Wesentlichen dadurch, dass die Anodenabgasführung 110b der zweiten Brennstoffzellenvorrichtung 102b in die Kathodenabgasführung 114b der zweiten Brennstoffzellenvorrichtung 102b mündet.

Das Anodenabgas der zweiten Brennstoffzellenvorrichtung 102b kann somit mittels des Kathodenabgases zunächst verdünnt werden, bevor es an die Umgebung 116 abgegeben wird.

Im Übrigen stimmt die in Fig. 5 dargestellte fünfte Ausführungsform des Brennstoffzellensystems 100 hinsichtlich Aufbau und Funktion mit der in Fig. 1 dargestellten ersten Ausführungsform überein, so dass auf deren vorstehende Beschreibung insoweit Bezug genommen wird.

Eine in Fig. 6 dargestellte sechste Ausführungsform eines Brennstoffzellensystems 100 unterscheidet sich von der in Fig. 5 dargestellten fünften Ausführungsform im Wesentlichen dadurch, dass die Anodenabgasführung 110b der zweiten Brennstoffzellenvorrichtung 102b nicht in die Kathodenabgasführung 114b der zweiten Brennstoffzellenvorrichtung 102b, sondern in die Kathodenabgasführung 114a der ersten Brennstoffzellenvorrichtung 102a mündet.

Das Anodenabgas der zweiten Brennstoffzellenvorrichtung 102b kann somit mittels des Kathodenabgases der ersten Brennstoffzellenvorrichtung 102a verdünnt werden, bevor es an die Umgebung 116 abgegeben wird.

Eine solche Art der Abgasführung kann insbesondere dann vorteilhaft sein, wenn die erste Brennstoffzellenvorrichtung 102a deutlich größer dimensioniert ist als die zweite Brennstoffzellenvorrichtung 102b, so dass mittels des Kathodenabgases der ersten Brennstoffzellenvorrichtung 102a eine größere Verdünnung des Anodenabgases der zweiten Brennstoffzellenvorrichtung 102b möglich ist.

Im Übrigen stimmt die in Fig. 6 dargestellte sechste Ausführungsform des Brennstoffzellensystems 100 hinsichtlich Aufbau und Funktion mit der in Fig. 5 dargestellten fünften Ausführungsform überein, so dass auf deren vorstehende Beschreibung insoweit Bezug genommen wird.

Eine in Fig. 7 dargestellte siebte Ausführungsform eines Brennstoffzellensystems 100 unterscheidet sich von der in Fig. 1 dargestellten ersten Ausführungsform im Wesentlichen dadurch, dass die Anodenabgasführung 110a der ersten Brennstoffzellenvorrichtung 102a und die Anodenabgasführung 110b der zweiten Brennstoffzellenvorrichtung 102b jeweils mit einer Entfeuchtungsvorrichtung 120 versehen sind.

Das Anodenabgas der ersten Brennstoffzellenvorrichtung 102a kann somit mittels einer in der Anodenabgasführung 110a angeordneten Entfeuchtungsvorrichtung 120a entfeuchtet werden, bevor es der zweiten Brennstoffzellenvorrichtung 102b zugeführt wird.

Ferner kann das Anodenabgas der zweiten Brennstoffzellenvorrichtung 102b mittels der in der Anodenabgasführung 110b angeordneten Entfeuchtungsvorrichtung 120b entfeuchtet werden, bevor es der Kathodenseite 106b der zweiten Brennstoffzellenvorrichtung 102b zugeführt wird.

Im Übrigen stimmt die in Fig. 7 dargestellte siebte Ausführungsform des Brennstoffzellensystems 100 hinsichtlich Aufbau und Funktion mit der in Fig. 1 dargestellten ersten Ausführungsform überein, so dass auf deren vorstehende Beschreibung insoweit Bezug genommen wird.

Die in Fig. 7 dargestellten Entfeuchtungsvorrichtungen 120a, 120b können wahlweise auch bei den weiteren dargestellten und/oder beschriebenen Ausführungsformen von Brennstoffzellensystemen 100 Verwendung finden.

Eine in Fig. 8 dargestellte achte Ausführungsform eines Brennstoffzellensystems 100 unterscheidet sich von der in Fig. 1 dargestellten ersten Ausführungsform im Wesentlichen dadurch, dass mindestens eine Zirkulationsvorrichtung 122 und mindestens eine Auslassvorrichtung 124 vorgesehen sind.

Die Zirkulationsvorrichtung 122 und die Auslassvorrichtung 124 sind dabei beispielhaft an der Anodenseite 104a der ersten Brennstoffzellenvorrichtung 102a angeordnet.

Es kann jedoch auch vorgesehen sein, dass die Anodenseite 104b der zweiten Brennstoffzellenvorrichtung 102b mit einer Zirkulationsvorrichtung 122 und/oder einer Auslassvorrichtung 124 versehen ist.

Mittels einer Zirkulationsvorrichtung 122 kann insbesondere ein Gaskreislauf ermöglicht werden.

Beispielsweise kann der mittels der Brennstoffzuführung 108a der ersten Brennstoffzellenvorrichtung 102a zugeführte Brennstoffstrom auf der Anodenseite 104a in einem Kreislauf geführt werden. Hierdurch kann die Effizienz der Brennstoffzellenvorrichtung 102 gesteigert werden.

Insbesondere in regelmäßigen Abständen muss das im Kreislauf geführte Gas erneuert werden.

Mittels der Auslassvorrichtung 124 kann dies gesteuert und/oder geregelt erfolgen. Insbesondere kann mittels der Auslassvorrichtung 124 das auf der Anodenseite 104a gebildete Anodenabgas in regelmäßigen Abständen über die Anodenabgasführung 110a abgeführt werden.

Alternativ hierzu kann mittels der Auslassvorrichtung 124 auch eine gleichmäßige Anodenabgasabführung erfolgen.

Im Übrigen stimmt die in Fig. 8 dargestellte achte Ausführungsform eines Brennstoffzellensystems 100 hinsichtlich Aufbau und Funktion mit der in Fig. 1 dargestellten ersten Ausführungsform überein, so dass auf deren vorstehende Beschreibung insoweit Bezug genommen wird.

Dadurch, dass bei sämtlichen Ausführungsformen eines Brennstoffzellensystems 100 eine Brennstoffabreicherung mittels der Brennstoffzellenvorrichtungen 102 des Brennstoffzellensystems 100 erfolgt, sind zusätzliche Vorrichtungen und/oder Bauteile des Brennstoffzellensystems 100 vorzugsweise entbehrlich, um brennstoffarmes Abgas sicher an die Umgebung 116 abgeben zu können.

### Bezugszeichenliste

- 100: Brennstoffzellensystem
- 102: Brennstoffzellenvorrichtung
- 102a: erste Brennstoffzellenvorrichtung
- 102b: zweite Brennstoffzellenvorrichtung
- 104: Anodenseite
- 104a: Anodenseite der ersten Brennstoffzellenvorrichtung
- 104b: Anodenseite der zweiten Brennstoffzellenvorrichtung
- 106: Kathodenseite
- 106a: Kathodenseite der ersten Brennstoffzellenvorrichtung
- 106b: Kathodenseite der zweiten Brennstoffzellenvorrichtung
- 108: Brennstoffzuführung
- 108a: Brennstoffzuführung der ersten Brennstoffzellenvorrichtung
- 108b: Brennstoffzuführung der zweiten Brennstoffzellenvorrichtung
- 110: Anodenabgasführung
- 110a: Anodenabgasführung der ersten Brennstoffzellenvorrichtung
- 110b: Anodenabgasführung der zweiten Brennstoffzellenvorrichtung
- 112: Oxidatorzuführung
- 112a: Oxidatorzuführung der ersten Brennstoffzellenvorrichtung
- 112b: Oxidatorzuführung der zweiten Brennstoffzellenvorrichtung
- 114: Kathodenabgasführung
- 114a: Kathodenabgasführung der ersten Brennstoffzellenvorrichtung
- 114b: Kathodenabgasführung der zweiten Brennstoffzellenvorrichtung
- 116: Umgebung
- 118: Steuervorrichtung
- 120: Entfeuchtungsvorrichtung
- 120a: Entfeuchtungsvorrichtung der ersten Brennstoffzellenvorrichtung
- 120b: Entfeuchtungsvorrichtung der zweiten Brennstoffzellenvorrichtung
- 122: Zirkulationsvorrichtung
- 124: Auslassvorrichtung

## Patentansprüche

1. Brennstoffzellensystem (100), umfassend zwei oder mehr Brennstoffzellenvorrichtungen (102), wobei jede Brennstoffzellenvorrichtung (102) Folgendes umfasst:
- eine Brennstoffzuführung (108) zur Zuführung eines Brennstoffstroms zu einer Anodenseite (104) der Brennstoffzellenvorrichtung (102);
- eine Anodenabgasführung (110) zur Abführung von Anodenabgas von der Anodenseite (104) der Brennstoffzellenvorrichtung (102);
- eine Oxidatorzuführung (112) zur Zuführung eines Oxidatorstroms zu einer Kathodenseite (106) der Brennstoffzellenvorrichtung (102);
- eine Kathodenabgasführung (114) zur Abführung von Kathodenabgas von der Kathodenseite (106) der Brennstoffzellenvorrichtung (102),
wobei zwei oder mehr Brennstoffzellenvorrichtungen (102) derart miteinander gekoppelt oder koppelbar sind, dass mittels einer Anodenabgasführung (110a) einer ersten Brennstoffzellenvorrichtung (102a) das in dieser ersten Brennstoffzellenvorrichtung (102a) erzeugte Anodenabgas über die Brennstoffzuführung (108b) einer zweiten Brennstoffzellenvorrichtung (102b) als Brennstoffstrom dieser zweiten Brennstoffzellenvorrichtung (102b) zuführbar ist,
wobei mittels einer Anodenabgasführung (110b) der zweiten Brennstoffzellenvorrichtung (102b) das in dieser zweiten Brennstoffzellenvorrichtung (102b) erzeugte Anodenabgas zumindest teilweise, insbesondere vollständig, über eine Oxidatorzuführung (112a) der ersten Brennstoffzellenvorrichtung (102a) als Teil des Oxidatorstroms dieser ersten Brennstoffzellenvorrichtung (102a) zuführbar ist,
wobei das Brennstoffzellensystem (100) eine Steuervorrichtung (118) zum Steuern und/oder Regeln des Brennstoffzellensystem (100) umfasst, wobei mittels der Steuervorrichtung (118) die zweite Brennstoffzellenvorrichtung (102b) in einen Brennstoffabreicherungsmodus versetzbar ist, in welchem unabhängig von einer mittels der zweiten Brennstoffzellenvorrichtung (102b) bereitzustellenden elektrischen Leistung oder Energie ein Umsetzungsgrad des zugeführten Brennstoffs maximal ist.

2. Brennstoffzellensystem (100) nach Anspruch 1, **dadurch gekennzeichnet, dass** mittels einer Anodenabgasführung (110b) der zweiten Brennstoffzellenvorrichtung (102b) das in dieser zweiten Brennstoffzellenvorrichtung (102b) erzeugte Anodenabgas zumindest teilweise, insbesondere vollständig, über eine Oxidatorzuführung (112b) der zweiten Brennstoffzellenvorrichtung (102b) als Teil des Oxidatorstroms dieser zweiten Brennstoffzellenvorrichtung (102b) zuführbar ist.

3. Brennstoffzellensystem (100) nach einem der Ansprüche 1 oder 2, **dadurch gekennzeichnet, dass** mittels einer Kathodenabgasführung (114a) der ersten Brennstoffzellenvorrichtung (102a) das in dieser ersten Brennstoffzellenvorrichtung (102a) erzeugte Kathodenabgas zumindest teilweise, insbesondere vollständig, über eine Oxidatorzuführung (112b) der zweiten Brennstoffzellenvorrichtung (102b) als Oxidatorstrom oder als Teil des Oxidatorstroms der zweiten Brennstoffzellenvorrichtung (102b) zuführbar ist.

4. Brennstoffzellensystem (100) nach einem der Ansprüche 1 bis 3, **dadurch gekennzeichnet, dass** mittels der Anodenabgasführung (110b) der zweiten Brennstoffzellenvorrichtung (102b) das in dieser zweiten Brennstoffzellenvorrichtung (102b) erzeugte Anodenabgas zumindest teilweise, insbesondere vollständig, der Kathodenabgasführung (114a) der ersten Brennstoffzellenvorrichtung (102a) zuführbar ist.

5. Brennstoffzellensystem (100) nach einem der Ansprüche 1 bis 4, **dadurch gekennzeichnet, dass** mittels der Anodenabgasführung (110b) der zweiten Brennstoffzellenvorrichtung (102b) das in dieser zweiten Brennstoffzellenvorrichtung (102b) erzeugte Anodenabgas zumindest teilweise, insbesondere vollständig, der Kathodenabgasführung (114b) der zweiten Brennstoffzellenvorrichtung (102b) zuführbar ist.

6. Brennstoffzellensystem (100) nach einem der Ansprüche 1 bis 5, **dadurch gekennzeichnet, dass** der Brennstoffstrom der ersten Brennstoffzellenvorrichtung (102a) Wasserstoff ist oder Wasserstoff umfasst.

7. Brennstoffzellensystem (100) nach einem der Ansprüche 1 bis 6, **dadurch gekennzeichnet, dass** das Brennstoffzellensystem (100) mindestens eine Entfeuchtungsvorrichtung (120) zum Abscheiden von Wasser aus dem Abgas einer oder mehrerer Brennstoffzellenvorrichtungen (102) umfasst.

8. Brennstoffzellensystem (100) nach einem der Ansprüche 1 bis 7, **dadurch gekennzeichnet, dass** mindestens eine Brennstoffzellenvorrichtung (102) eine Zirkulationsvorrichtung (122) umfasst, mittels welcher ein der Anodenseite (104) zugeführter Brennstoffstrom in einem durch die Anodenseite (104) hindurchgeführten Kreislauf führbar ist.

9. Brennstoffzellensystem (100) nach einem der Ansprüche 1 bis 8, **dadurch gekennzeichnet, dass** mindestens eine Brennstoffzellenvorrichtung (102) eine Auslassvorrichtung (124) umfasst, mittels welcher das Anodenabgas von der Anodenseite (104) der Brennstoffzellenvorrichtung (102) kontinuierlich oder mit, insbesondere regelmäßigen, Unterbrechungen über die Anodenabgasführung (110) abführbar ist.

10. Brennstoffzellensystem (100) nach einem der Ansprüche 1 bis 9, **dadurch gekennzeichnet, dass** mindestens eine Brennstoffzellenvorrichtung (102) eine Auslassvorrichtung (124) umfasst, mittels welcher das Kathodenabgas von der Kathodenseite (106) der Brennstoffzellenvorrichtung (102) kontinuierlich oder mit, insbesondere regelmäßigen, Unterbrechungen über die Kathodenabgasführung (114) abführbar ist.

11. Verfahren zum Betreiben eines Brennstoffzellensystems (100), umfassend zwei oder mehr Brennstoffzellenvorrichtungen (102),
wobei das Verfahren Folgendes umfasst:
- Abführen von Anodenabgas von einer Anodenseite (104a) einer ersten Brennstoffzellenvorrichtung (102a);
- Zuführen von zumindest einem Teil des Anodenabgases aus der ersten Brennstoffzellenvorrichtung (102a) zu einer Anodenseite (104b) einer zweiten Brennstoffzellenvorrichtung (102b) als Brennstoffstrom der zweiten Brennstoffzellenvorrichtung (102b),
wobei das in der zweiten Brennstoffzellenvorrichtung (102b) erzeugte Anodenabgas zumindest teilweise, insbesondere vollständig, als Teil eines Oxidatorstroms der ersten Brennstoffzellenvorrichtung (102a) und/oder der zweiten Brennstoffzellenvorrichtung (102b) zugeführt wird,
wobei die zweite Brennstoffzellenvorrichtung (102b) in einem Brennstoffabreicherungsmodus betrieben wird, in welchem unabhängig von einer mittels der zweiten Brennstoffzellenvorrichtung (102b) bereitzustellenden elektrischen Leistung oder Energie ein Umsetzungsgrad des zugeführten Brennstoffs maximal ist.

12. Verfahren nach Anspruch 11, **dadurch gekennzeichnet, dass** ein in der ersten Brennstoffzellenvorrichtung (102a) erzeugtes Kathodenabgas zumindest teilweise, insbesondere vollständig, als ein Oxidatorstrom oder als Teil eines Oxidatorstroms der zweiten Brennstoffzellenvorrichtung (102b) zugeführt wird.

13. Verfahren nach einem der Ansprüche 11 oder 12, **dadurch gekennzeichnet, dass** ein in der zweiten Brennstoffzellenvorrichtung (102b) erzeugtes Anodenabgas zumindest teilweise, insbesondere vollständig, einem Kathodenabgas der ersten Brennstoffzellenvorrichtung (102a) und/oder einem Kathodenabgas der zweiten Brennstoffzellenvorrichtung (102b) zugeführt wird.

14. Verfahren nach einem der Ansprüche 11 bis 13, **dadurch gekennzeichnet, dass** bei mindestens einer Brennstoffzellenvorrichtung (102), insbesondere bei der ersten Brennstoffzellenvorrichtung (102a) und/oder bei der zweiten Brennstoffzellenvorrichtung (102b), ein der Anodenseite (104) zugeführter Brennstoffstrom in einem durch die Anodenseite (104) hindurchgeführten Kreislauf geführt und in der Brennstoffzellenvorrichtung (102) erzeugtes Anodenabgas periodisch und/oder stoßweise abgeführt wird.

15. Verfahren nach einem der Ansprüche 11 bis 14, **dadurch gekennzeichnet, dass** ein Wasserstoffgehalt des an eine Umgebung (116) des Brennstoffzellensystems (100) abgegebenen Abgases, insbesondere des Kathodenabgases, höchstens ungefähr 2 Vol.-% beträgt.

## Claims

1. Fuel cell system (100) comprising two or more fuel cell devices (102) wherein each fuel cell device (102) comprises the following:
- a fuel feed (108) for supplying a fuel stream to an anode side (104) of the fuel cell device (102);
- an anode exhaust gas discharge (110) for removing anode exhaust gas from the anode side (104) of the fuel cell device (102);
- an oxidizer feed (112) for supplying an oxidizer stream to a cathode side (106) of the fuel cell device (102);
- a cathode exhaust gas discharge (114) for removing cathode exhaust gas from the cathode side (106) of the fuel cell device (102),
wherein two or more fuel cell devices (102) are coupled or are couplable to one another in such a manner that the anode exhaust gas produced in a first fuel cell device (102a) by means of an anode exhaust gas discharge (110a) of this first fuel cell device (102a) is suppliable via the fuel feed (108b) of a second fuel cell device (102b) as a fuel stream to this second fuel cell device (102b),
wherein the anode exhaust gas produced in the second fuel cell device (102b) by means of an anode exhaust gas discharge (110b) of this second fuel cell device (102b) is suppliable at least partially and in particular in its entirety via an oxidizer feed (112a) of the first fuel cell device (102a) as a part of the oxidizer stream to this first fuel cell device (102a), wherein the fuel cell system (100) comprises a control device (118) for controlling and/or regulating the fuel cell system (100), wherein the second fuel cell device (102b) is switchable by means of the control device (118) into a fuel depletion mode in which the conversion rate of the supplied fuel is at a maximum independently of the electrical power or energy that is to be provided by means of the second fuel cell device (102b).

2. A fuel cell system (100) in accordance with Claim 1, **characterized in that** the anode exhaust gas produced in the second fuel cell device (102b) by means of an anode exhaust gas discharge (110b) of this second fuel cell device (102b) is suppliable at least partially and in particular in its entirety via an oxidizer feed (112b) of the second fuel cell device (102b) as a part of the oxidizer stream to this second fuel cell device (102b).

3. A fuel cell system (100) in accordance with either of the Claims 1 or 2, **characterized in that** the cathode exhaust gas produced in the first fuel cell device (102a) by means of a cathode exhaust gas discharge (114a) of this first fuel cell device (102a) is suppliable at least partially and in particular in its entirety via an oxidizer feed (112b) of the second fuel cell device (102b) as an oxidizer stream or as part of the oxidizer stream to the second fuel cell device (102b).

4. A fuel cell system (100) in accordance with any of the Claims 1 to 3, **characterized in that** the anode exhaust gas produced in the second fuel cell device (102b) by means of the anode exhaust gas discharge (110b) of this second fuel cell device (102b) is suppliable at least partially and in particular in its entirety to the cathode exhaust gas discharge (114a) of the first fuel cell device (102a).

5. A fuel cell system (100) in accordance with any of the Claims 1 to 4, **characterized in that** the anode exhaust gas produced in the second fuel cell device (102b) by means of the anode exhaust gas discharge (110b) of this second fuel cell device (102b) is suppliable at least partially and in particular in its entirety to the cathode exhaust gas discharge (114b) of the second fuel cell device (102b).

6. A fuel cell system (100) in accordance with any of the Claims 1 to 5, **characterized in that** the fuel stream of the first fuel cell device (102a) is hydrogen or comprises hydrogen.

7. A fuel cell system (100) in accordance with any of the Claims 1 to 6, **characterized in that** the fuel cell system (100) comprises at least one dehumidifying device (120) for separating water from the exhaust gas of one or more fuel cell devices (102).

8. A fuel cell system (100) in accordance with any of the Claims 1 to 7, **characterized in that** at least one fuel cell device (102) comprises a circulating device (122) by means of which a fuel stream supplied to the anode side (104) is conveyable in a circulatory loop passing through the anode side (104).

9. A fuel cell system (100) in accordance with any of the Claims 1 to 8, **characterized in that** at least one fuel cell device (102) comprises an outlet device (124) by means of which the anode exhaust gas is removable from the anode side (104) of the fuel cell device (102) via the anode exhaust gas discharge (110) continuously or with, in particular regular, interruptions.

10. A fuel cell system (100) in accordance with any of the Claims 1 to 9, **characterized in that** at least one fuel cell device (102) comprises an outlet device (124) by means of which the cathode exhaust gas is removable from the cathode side (106) of the fuel cell device (102) via the cathode exhaust gas discharge (114) continuously or with, in particular regular, interruptions.

11. Method for operating a fuel cell system (100) comprising two or more fuel cell devices (102), wherein the method comprises the following
- removal of anode exhaust gas from an anode side (104a) of a first fuel cell device (102a);
- supplying at least a part of the anode exhaust gas from the first fuel cell device (102a) to an anode side (104b) of a second fuel cell device (102b) as a fuel stream to the second fuel cell device (102b),
wherein the anode exhaust gas produced in the second fuel cell device (102b) is supplied at least partially and in particular in its entirety as part of an oxidizer stream to the first fuel cell device (102a) and/or to the second fuel cell device (102b), wherein the second fuel cell device (102b) is operated in a fuel depletion mode in which the conversion rate of the supplied fuel is at a maximum independently of the electrical power or energy that is to be provided by means of the second fuel cell device (102b).

12. A method in accordance with Claim 11, **characterized in that** a cathode exhaust gas produced in the first fuel cell device (102a) is supplied at least partially and in particular in its entirety as an oxidizer stream or part of an oxidizer stream to the second fuel cell device (102b).

13. A method in accordance with either of the Claims 11 or 12, **characterized in that** an anode exhaust gas produced in the second fuel cell device (102b) is supplied at least partially and in particular in its entirety to a cathode exhaust gas of the first fuel cell device (102a) and/or a cathode exhaust gas of the second fuel cell device (102b).

14. A method in accordance with any of the Claims 11 to 13, **characterized in that**, in the case of at least one fuel cell device (102) and in particular in the case of the first fuel cell device (102a) and/or in the case of the second fuel cell device (102b), a fuel stream supplied to the anode side (104) is conveyed in a circulatory loop passing through the anode side (104) and the anode exhaust gas that is produced in the fuel cell device (102) is removed periodically and/or in intermittent manner.

15. A method in accordance with any of the Claims 11 to 14, **characterized in that** the hydrogen content of the exhaust gas and in particular that of the cathode exhaust gas which is discharged into the surroundings (116) of the fuel cell system (100) amounts to at most approximately 2 Vol.-%.

## Revendications

1. Système de piles à combustibles (100), comprenant deux dispositifs de piles à combustible (102) ou plus, dans lequel chaque dispositif de piles à combustible (102) comprend ce qui suit :
- une conduite d'alimentation en combustible (108) destinée à l'alimentation en un flux de combustible d'un côté anode (104) du dispositif de piles à combustible (102) ;
- une conduite de gaz d'échappement d'anode (110) destinée à l'échappement de gaz d'échappement d'anode du côté anode (104) du dispositif de piles à combustible (102) ;
- une conduite d'alimentation en oxydant (112) destinée à l'alimentation en un flux d'oxydant d'un côté cathode (106) du dispositif de piles à combustible (102) ;
- une conduite de gaz d'échappement de cathode (114) destinée à l'échappement de gaz d'échappement de cathode du côté cathode (106) du dispositif de piles à combustible (102),
dans lequel deux dispositifs de piles à combustible (102) ou plus sont couplés ou peuvent être couplés ensemble de telle sorte que, au moyen d'une conduite de gaz d'échappement d'anode (110a) d'un premier dispositif de piles à combustible (102a) le gaz d'échappement d'anode généré dans ce premier dispositif de piles à combustible (102a) peut venir alimenter via la conduite d'alimentation en combustible (108b) d'un deuxième dispositif de piles à combustible (102b) en tant que flux de combustible ce deuxième dispositif de piles à combustible (102b),
dans lequel au moyen d'une conduite de gaz d'échappement d'anode (110b) du deuxième dispositif de piles à combustible (102b) le gaz d'échappement d'anode généré dans ce deuxième dispositif de piles à combustible (102b) peut venir alimenter au moins partiellement, en particulier totalement, via une alimentation en oxydant (112a) du premier dispositif de piles à combustible (102a) en tant que partie du flux d'oxydant ce premier dispositif de piles à combustible (102a),
dans lequel le système de piles à combustibles (100) comprend un dispositif de commande (118) destiné à la commande et/ou au réglage du système de piles à combustible (100), dans lequel au moyen du dispositif de commande (118) le deuxième dispositif de piles à combustible (102b) peut être mis dans un mode d'appauvrissement en combustible dans lequel, indépendamment d'une puissance électrique ou une énergie à mettre à disposition au moyen du deuxième dispositif de piles à combustible (102b), un degré de conversion du combustible d'alimentation est maximal.

2. Système de piles à combustible (100) selon la revendication 1, **caractérisé en ce que**, au moyen d'une conduite de gaz d'échappement d'anode (110b) du deuxième dispositif de piles à combustible (102b) le gaz d'échappement d'anode généré dans ce deuxième dispositif de piles à combustible (102b) peut venir alimenter au moins partiellement, en particulier totalement, via une alimentation en oxydant (112b) du deuxième dispositif de piles à combustible (102b) en tant que partie du flux d'oxydant ce deuxième dispositif de piles à combustible (102b).

3. Système de piles à combustible (100) selon l'une des revendications 1 ou 2, **caractérisé en ce que**, au moyen d'une conduite de gaz d'échappement de cathode (114a) du premier dispositif de piles à combustible (102a) le gaz d'échappement de cathode généré dans ce premier dispositif de piles à combustible (102a) peut venir alimenter au moins partiellement, en particulier totalement, via une conduite d'alimentation en oxydant (112b) du deuxième dispositif de piles à combustible (102b) en tant que flux d'oxydant ou en tant que partie du flux d'oxydant le deuxième dispositif de piles à combustible (102b).

4. Système de piles à combustible (100) selon l'une des revendications 1 à 3, **caractérisé en ce que**, au moyen de la conduite de gaz d'échappement d'anode (110b) du deuxième dispositif de piles à combustible (102b) le gaz d'échappement d'anode généré dans ce deuxième dispositif de piles à combustible (102b) peut venir alimenter au moins partiellement, en particulier totalement, la conduite de gaz d'échappement de cathode (114a) du premier dispositif de piles à combustible (102a).

5. Système de piles à combustible (100) selon l'une des revendications 1 à 4, **caractérisé en ce que**, au moyen de la conduite de gaz d'échappement d'anode (110b) du deuxième dispositif de piles à combustible (102b) le gaz d'échappement d'anode généré dans ce deuxième dispositif de piles à combustible (102b) peut venir alimenter au moins partiellement, en particulier totalement, la conduite de gaz d'échappement de cathode (114b) du deuxième dispositif de piles à combustible (102b).

6. Système de piles à combustible (100) selon l'une des revendications 1 à 5, **caractérisé en ce que** le flux de combustible du premier dispositif de piles à combustible (102a) est l'hydrogène ou comprend de l'hydrogène.

7. Système de piles à combustible (100) selon l'une des revendications 1 à 6, **caractérisé en ce que** le système de piles à combustible (100) comprend au moins un dispositif de déshydratation (120) destiné à séparer l'eau du gaz d'échappement d'un ou plusieurs dispositifs de piles à combustible (102).

8. Système de piles à combustible (100) selon l'une des revendications 1 à 7, **caractérisé en ce qu'**au moins un dispositif de piles à combustible (102) comprend un dispositif de circulation (122) au moyen duquel un flux de combustible alimentant le côté anode (104) peut être guidé dans un circuit passé à travers le côté anode (104).

9. Système de piles à combustible (100) selon l'une des revendications 1 à 8, **caractérisé en ce qu'**au moins un dispositif de piles à combustible (102) comprend un dispositif de sortie (124) au moyen duquel le gaz d'échappement d'anode peut être évacué du côté anode (104) du dispositif de piles à combustible (102) de manière continue ou avec des interruptions, en particulier régulières, via la conduite de gaz d'échappement d'anode (110).

10. Système de piles à combustible (100) selon l'une des revendications 1 à 9, **caractérisé en ce qu'**au moins un dispositif de piles à combustible (102) comprend un dispositif d'évacuation (124) au moyen duquel le gaz d'échappement de cathode peut être évacué du côté cathode (106) du dispositif de piles à combustible (102) de manière continue ou avec des interruptions, en particulier régulières, via la conduite de gaz d'échappement de cathode (114).

11. Procédé destiné à exploiter un système de piles à combustible (100), comprenant deux dispositifs de piles à combustible (102) ou plus, dans lequel le procédé comprend ce qui suit :
- l'évacuation de gaz d'échappement d'anode d'un coté anode (104a) d'un premier dispositif de piles à combustible (102a) ;
- l'alimentation d'au moins une partie du gaz d'échappement d'anode en provenance du premier dispositif de piles à combustible (102a) vers un côté anode (104b) d'un deuxième dispositif de piles à combustible (102b) en tant que flux de combustible du deuxième dispositif de piles à combustible (102b),
dans lequel le gaz d'échappement d'anode généré dans le deuxième dispositif de piles à combustible (102b) vient alimenter au moins partiellement, en particulier totalement, en tant que partie d'un flux d'oxydant le premier dispositif de piles à combustible (102a) et/ou le deuxième dispositif de piles à combustible (102b),
dans lequel le deuxième dispositif de piles à combustible (102b) est exploité dans un mode d'appauvrissement de combustible dans lequel, indépendamment d'une puissance électrique ou une énergie à mettre à disposition au moyen du deuxième dispositif de piles à combustible (102b), un degré de conversion du combustible d'alimentation est maximal.

12. Procédé selon la revendication 11, **caractérisé en ce qu'**un gaz d'échappement de cathode généré dans le premier dispositif de piles à combustible (102a) vient alimenter au moins partiellement, en particulier totalement, en tant que flux d'oxydant ou en tant que partie d'un flux d'oxydant le deuxième dispositif de piles à combustible (102b).

13. Procédé selon l'une des revendications 11 ou 12, **caractérisé en ce qu'**un gaz d'échappement d'anode généré dans le deuxième dispositif de piles à combustible (102b) vient alimenter au moins partiellement, en particulier totalement, un gaz d'échappement de cathode du premier dispositif de piles à combustible (102a) et/ou un gaz d'échappement de cathode du deuxième dispositif de piles à combustible (102b).

14. Procédé selon l'une des revendications 11 à 13, **caractérisé en ce que** dans au moins un dispositif de piles à combustible (102), en particulier dans le premier dispositif de piles à combustible (102a) et/ou dans le deuxième dispositif de piles à combustible (102b), un flux de combustible venant alimenter le côté anode (104) est guidé dans un circuit passé à travers le côté anode (104) et un gaz d'échappement d'anode généré dans le dispositif de piles à combustible (102) est évacué périodiquement et/ou par à-coups.

15. Procédé selon l'une des revendications 11 à 14, **caractérisé en ce qu'**une teneur en hydrogène du gaz d'échappement échappé dans l'environnement immédiat (116) du système de piles à combustible (100), en particulier du gaz d'échappement de cathode, s'élève au maximum à environ 2 % en volume.
